(19) Europäisches Patentamt
European Patent Office
Office européen des brevets

(11) **EP 2 272 613 B1**

(12) **EUROPEAN PATENT SPECIFICATION**

(45) Date of publication and mention
of the grant of the patent:
**10.09.2014  Bulletin 2014/37**

(51) Int Cl.:
***B23H 7/04*** *(2006.01)*      *B23H 7/20* *(2006.01)*

(21) Application number: **10167672.4**

(22) Date of filing: **29.06.2010**

(54) **Wire-cut electric discharge machine with function to suppress local production of streaks during finish machining**

Elektrische Drahterodiermaschine mit Funktion zur Unterdrückung der lokalen Bildung von Streifen während der Endbearbeitung

Machine à décharge électrique de coupe-pâte avec fonction pour supprimer la production locale de traînage durant un usinage de finition

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **07.07.2009   JP 2009160775**

(43) Date of publication of application:
**12.01.2011   Bulletin 2011/02**

(73) Proprietor: **FANUC CORPORATION**
**Oshino-mura**
**Minamitsuru-gun**
**Yamanashi 401-0597 (JP)**

(72) Inventors:
• **Suzuki, Koji**
**Minamitsuru-gun,**
**Yamanashi 401-0597 (JP)**
• **Hiraga, Kaoru**
**Minamitsuru-gun, Yamanashi 401-0597 (JP)**

(74) Representative: **Ward, James Norman**
**Haseltine Lake LLP**
**Lincoln House, 5th Floor**
**300 High Holborn**
**London WC1V 7JH (GB)**

(56) References cited:
**US-A- 5 362 936       US-A1- 2007 119 821**
**US-B1- 6 278 075**

**Description**

**Technical Field to which the Invention pertains**

The present invention relates to a wire-cut electric discharge machine with a function to suppress local production of streaks during finish machining.

**Related Art**

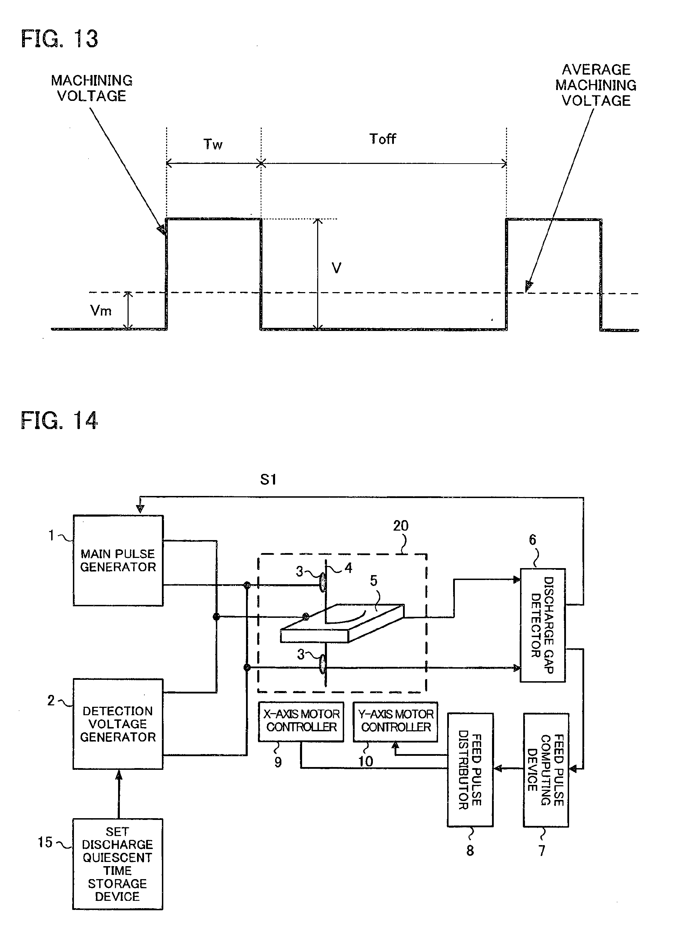

An outline of a conventional wire-cut electric discharge machine will now be described with reference to FIG. 14.

One cycle of wire-cut electric discharge machining is started by applying a detection pulse voltage V2 generated by a detection voltage generator 2 to a gap (hereinafter referred to as a machining gap) between a wire electrode 4 and a workpiece 5 in a work tank 20 in order to check if electric discharge is possible in the machining gap. The detection voltage generator 2 generates the detection pulse voltage V2, based on a signal output from a set discharge quiescent time storage device 15.

The discharge gap detector 6 comprises a circuit connected to the workpiece 5 and the wire electrode 4 and configured to determine by a reduction of the detection pulse voltage V2 whether or not the machining gap is dischargeable. Based on a detected voltage that changes depending on a change in the machining gap, the discharge gap detector 6 outputs a signal for servo feed to a feed pulse computing device 7.

Based on the signal for servo feed received from the discharge gap detector 6, the feed pulse computing device 7 produces a pulse train with a controlled feed pulse interval so that electric discharge can be repeated optimally (normally, in order that the voltage in the machining gap is constant), and outputs the produced pulse train to a feed pulse distributor 8. Based on a machining program, the feed pulse distributor 8 distributes and outputs the pulse train from the feed pulse computing device 7 to X- and Y-axis motor controllers 9 and 10 that drive a table on which the workpiece 5 is mounted.

If a voltage drop is caused between the workpiece 5 and the wire electrode 4, the discharge gap detector 6 detects it, determines that the machining gap is dischargeable, and delivers a main pulse input signal S1 to a main pulse generator 1. Thereupon, in response to this input signal S1, the main pulse generator 1 generates a main pulse voltage V1 in the machining gap and passes a main pulse current (electric discharge machining current) through the machining gap. Then, after the passage of an off time suitable for cooling the machining gap, the detection pulse voltage V2 is applied again to the machining gap. Wire-cut electric discharge machining is achieved by repeatedly performing this cycle of operation.

The following techniques are known as conventional techniques for wire-cut electric discharge machining (that can overcome changes in thickness of workpieces to be machined, in particular).

According to a technique described in Japanese Patent Application Laid-Open No. 11-221718and US 6,278,075 B1, a change in the thickness of a workpiece is detected by the ratio between the number of reference discharge pulses and the number of detected discharge pulses, and wire breakage attributable to a reduction in thickness change can be prevented by controlling electric discharge energy lest the machining current density change before or after the thickness change.

According to a technique described in Japanese Patent Application Laid-Open No. 2008-62303, a machining pulse voltage is applied in the form of a plurality of pulses to a machining gap to suppress vibration of a wire electrode, thereby suppressing production of streaks in a step portion where the thickness of a workpiece suddenly changes.

In performing machining such that the thickness of a workpiece increases, according to a technique described in Japanese Patent Application Laid-Open No. 55-112728, a predetermined segment is machined under electrical conditions before the thickness increase, after the thickness change is detected, and the electrical machining conditions are gradually increased thereafter to obtain an optimally great thickness value for control. In performing machining such that the thickness of a workpiece is reduced, according to a technique described in Japanese Patent Application Laid-Open No. 61-95824, on the other hand, a predetermined segment of a thin plate portion is machined under electrical conditions controlled so that a machining speed before the thickness reduction is obtained after the thickness change is detected, and the machining speed is gradually increased to obtain an optimally small thickness value for control.

According to a technique described in Japanese Patent Application Laid-Open No. 55-65033, a change in the thickness of a workpiece is detected by a change in the machining feed rate, and the machining current is increased if the feed rate is reduced. If the feed rate is increased, the machining current is reduced to its minimum and then gradually increased to its optimal value.

According to a technique described in Japanese Patent Application Laid-Open No. 5-15471, a plurality of machining conditions are previously set and stored based on combinations of the pressure of a working fluid and the thickness of a workpiece, and optimal machining conditions are selected based on the pressure and the thickness, whereby wire breakage and reduction in the machining feed speed can be prevented despite the change of the working fluid pressure or thickness. According to a technique described in Japanese Patent Application Laid-Open No.

2003-170316, moreover, a plurality of machining conditions are previously set and stored based on combinations of the pressure of a working fluid and the thickness of a workpiece, the working fluid pressure is estimated by the number of defective pulses detected, and wire breakage is prevented by selecting optimal machining conditions based on the estimated pressure and the detected thickness.

According to a technique described in Japanese Patent Application Laid-Open No. 9-290328, the thickness of a workpiece is detected by the electric discharge pulse energy and the machining feed rate, and breakage of a wire electrode is prevented by switching the level of electrical machining conditions in accordance with the detected thickness.

According to a technique described in Japanese Patent Application Laid-Open No. 5-305517, the thickness of a workpiece is detected by the frequency of electric discharge per unit time and the machining feed rate, an optimal discharge period is determined in accordance with the detected thickness, and high-speed machining is achieved without involving wire breakage even at a thin plate portion.

In the wire-cut electric discharge machining, as described above, the workpiece is machined by causing electric discharge in the machining gap between the workpiece and the wire electrode. There is a problem, therefore, that machined surfaces are not flat but slightly concave due to vibration of the wire electrode around the upper and lower surfaces of the workpiece caused by a shock of the electric discharge in the machining gap.

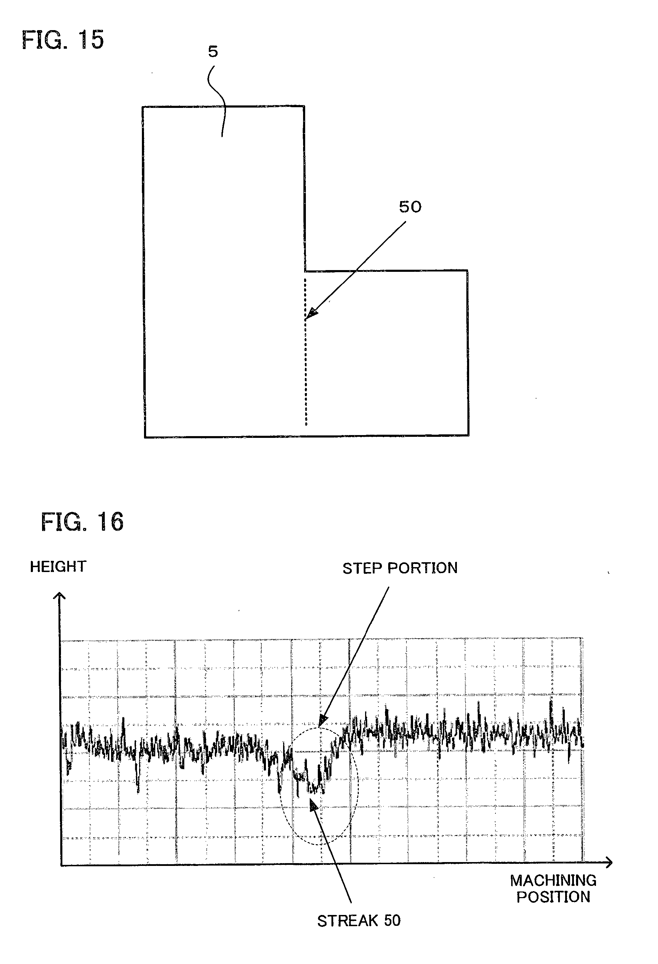

If a part (step portion) where the workpiece thickness suddenly changes is machined (step machining), in particular, a streaky slit, such as a streak 50 shown in FIG. 15, may be produced in the step portion of the workpiece 5 or the wire electrode may be broken. FIG. 16 is a diagram qualitatively illustrating a profile indicative of the result of a measurement of the depth of the streak 50 (FIG. 15) in the step portion of the workpiece 5, which is machined by the conventional wire-cut electric discharge machine.

The vibration of the wire that is produced as the state of electric discharge in the machining gap between the wire electrode 4 and the workpiece 5 suddenly changes can be considered to be the cause of the steak 50 produced in the step portion when the wire-cut electric discharge machining is performed. On the other hand, the breakage of the wire electrode is assumed to be the result of excessive supply of electric discharge energy at the thin plate portion of the workpiece.

In the techniques described individually in the patent documents described above, electric discharge energy is controlled in step machining of the workpiece so that appropriate energy can be supplied in accordance with the workpiece thickness, in order to prevent wire breakage during rough machining. On the other hand, finish machining is generally performed with constant electric discharge energy. This is done because the finish machining is intended to obtain uniform smooth machined surfaces. If the electric discharge energy is changed according to the location as in rough machining, the surface quality of the workpiece may also be changed depending on the location.


## SUMMARY OF THE INVENTION

Accordingly, the object of the present invention is to provide a wire-cut electric discharge machine with a function to suppress production of streaks in a region where the thickness of a workpiece changes, and more particularly, to provide a wire-cut electric discharge machine with a function to suppress production of streaks in a region where the thickness of a workpiece changes during finish machining.

The invention is defined in claim 1. Specific embodiments are set out in the sub claims.

The wire-cut electric discharge machine may further comprise immediately preceding input energy storage means for storing the energy calculated by the energy calculating means during the electric discharge machining for the predetermined distance immediately previously calculated by the machining distance computing means, and the thickness change detecting means may be configured to obtain the thickness change of the workpiece, based on the input energy calculated by the energy calculating means and the input energy stored in the immediately preceding input energy storage means, every time the predetermined distance is calculated by the machining distance computing means.

The energy input from the machining power source unit, which is calculated by the energy calculating means, may be the number of pulses of the pulse current input from the machining power source unit or an integral value of the pulse current input from the machining power source unit.

The machining condition adjusting means may be configured to adjust the energy input from the machining power source unit by adjusting the length of a discharge quiescent time during which application of a voltage to the machining gap between the wire electrode and the workpiece is halted, based on the thickness change of the workpiece, thereby regulating the energy input from the machining power source unit.

The thickness change detecting means may be configured to conclude that the thickness is changed when a predetermined value is exceeded by the detected thickness change.

According to the present invention, there may be provided a wire-cut electric discharge machine with a function to suppress production of streaks in a region where the thickness of a workpiece changes, and more particularly, to provide a wire-cut electric discharge machine with a function to suppress production of streaks in a region where the thickness of a workpiece changes during finish machining.

## BRIEF DESCRIPTION OF THE DRAWINGS

FIG. 1 is a diagram illustrating a first embodiment of a wire-cut electric discharge machine according to the present invention;

FIG. 2 is a diagram illustrating how a workpiece is machined in the direction from its thick part to thin part by the wire-cut electric discharge machine;

FIG. 3 is a diagram illustrating how machining is progressed from a thin part of a workpiece to a thick part;

FIG. 4 is a diagram illustrating the change of the discharge quiescent time in a region where the thickness of the workpiece changes, as shown in FIGS. 2 and 3;

FIG. 5 is a diagram qualitatively illustrating the result of a measurement of a profile of a step portion of the workpiece, which is machined by the wire-cut electric discharge machine of the present invention, by means of a surface roughness meter;

FIG. 6 is a diagram illustrating a workpiece with its thickness gradually changed (from t1 to t2) without a sudden change;

FIG. 7 is a diagram illustrating a second embodiment of the wire-cut electric discharge machine according to the invention;

FIG. 8 is a diagram illustrating a third embodiment of the wire-cut electric discharge machine according to the invention;

FIG. 9 is a diagram illustrating a fourth embodiment of the wire-cut electric discharge machine according to the invention;

FIG. 10 is a diagram illustrating a fifth embodiment of the wire-cut electric discharge machine according to the invention;

FIG. 11 is a diagram illustrating a sixth embodiment of the wire-cut electric discharge machine according to the invention;

FIG. 12 is a diagram illustrating a seventh embodiment of the wire-cut electric discharge machine according to the invention;

FIG. 13 is a diagram illustrating the relationships between a no-load peak voltage V, average machining voltage Vm, no-load machining time Tw, and off time Toff;

FIG. 14 is a diagram illustrating an outline of a conventional wire-cut electric discharge machine;

FIG. 15 is a diagram illustrating how a streaky slit is produced in a part (step portion) where the thickness of a workpiece suddenly changes when the step portion is machined (step machining); and

FIG. 16 is a diagram qualitatively illustrating a profile as the result of a measurement of the depth of the streaky slit (FIG. 15) in the step portion of the workpiece, which is machined by the conventional wire-cut electric discharge machine, by means of the surface roughness meter.

## DETAILED DESCRIPTION OF THE INVENTION

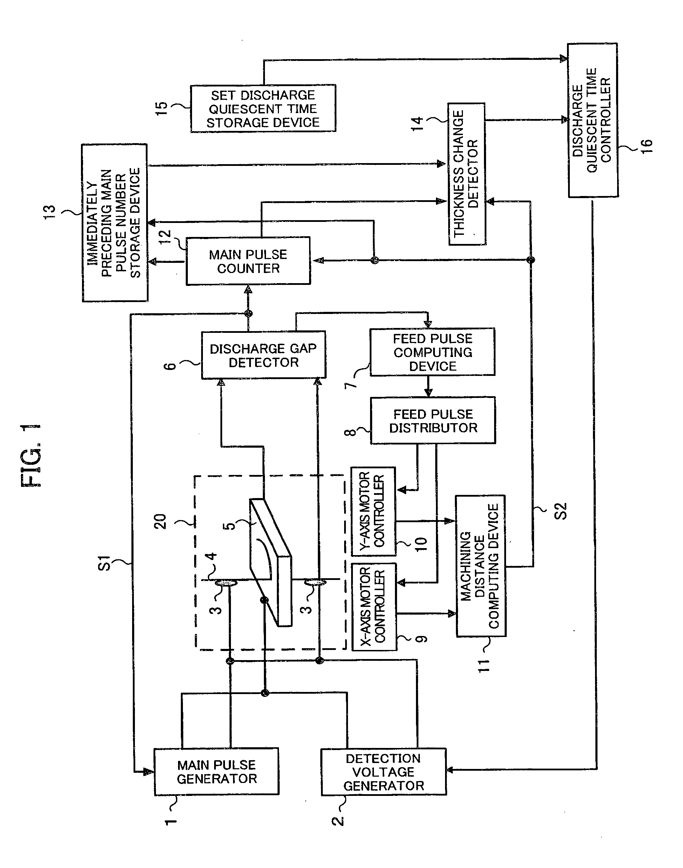

A first embodiment of a wire-cut electric discharge machine according to the present invention will now be described with reference to FIG. 1. In FIG. 1, the same reference numerals are used for component parts identical with those of the conventional wire-cut electric discharge machine shown in FIG. 14.

A main pulse generator 1 is an apparatus that applies a pulse voltage (main pulse voltage V1) to a machining gap between a wire electrode 4 and a workpiece 5 in order to perform electric discharge. The main pulse generator 1 comprises a DC power source, a circuit formed of switching elements such as transistors, a capacitor charge and discharge circuit, etc.

A detection voltage generator 2 applies a detection pulse voltage V2 (lower than the main pulse voltage from the main pulse generator 1) to the machining gap between the wire electrode 4 and the workpiece 5, in order to determine whether or not the machining gap allows electric discharge. The detection voltage generator 2 comprises active elements, such as a transistor, a circuit formed of a resistor, capacitor, etc., a DC power source, and the like.

Conductive brushes 3 are members for exciting the wire electrode 4. These conductive brushes 3 are connected individually to respective first terminals of the main pulse generator 1 and the detection voltage generator 2. Further, the workpiece 5 is connected to respective second terminals of the generators 1 and 2. Based on this arrangement, the main pulse voltage V1 generated from the main pulse generator 1 and the detection pulse voltage V2 generated from the detection voltage generator 2 are applied to the machining gap between the workpiece 5 and the wire electrode 4 traveling relative to the workpiece.

A discharge gap detector 6 is electrically connected to the workpiece 5 and the wire electrode 4 and determines, by a drop of the detection pulse voltage V2, whether or not the machining gap between the wire electrode 4 and the workpiece 5 is dischargeable. If the drop of the detection pulse voltage V2 is detected, the discharge gap detector 6 determines that the machining gap is dischargeable, and delivers a main pulse input signal S1 to the main pulse generator 1. On receipt of the main pulse input signal S1 from the discharge gap detector 6, on the other hand, the main pulse generator 1 generates the main pulse voltage V1 and passes a main pulse current (electric discharge machining current) with a predetermined width through the machining gap between the wire electrode 4 and the workpiece 5. Further, the main pulse input signal S1 delivered from the discharge gap detector 6 is also input to a main pulse counter 12, in which input pulses are counted. Furthermore, the discharge gap detector 6 outputs a signal for servo feed to a feed pulse computing device 7.

Based on the servo-feed signal from the discharge gap detector 6, the feed pulse computing device 7 generates a pulse train of which the feed pulse interval is controlled so that electric discharge is repeated optimally (normally, in order that the inter-electrode voltage is constant) and outputs the generated pulse train to a feed pulse distributor 8. Based on the input pulse train, the feed pulse distributor 8 distributes X- and Y-axis drive pulses according to a machining program, and outputs the distributed drive pulses to an X-axis motor controller 9 and a Y-axis motor controller 10 that drive a table on which the workpiece 5 is mounted.

A machining distance computing device 11 is connected to the X- and Y-axis motor controllers 9 and 10. Based on position feedback signals from position sensors (not shown) that are attached individually to an X-axis drive motor (not shown) and a Y-axis drive motor (not shown), the computing device 11 calculates a distance of movement of the wire electrode 4 relative to the workpiece 5. Every time a preset distance (predetermined distance) is covered, the computing device 11 outputs a signal S2 to each of the main pulse counter 12, an immediately preceding main pulse number storage device 13, and a thickness change detector 14.

Based on the predetermined distance detection signal S2 output from the machining distance computing device 11, the main pulse counter 12 counts the pulses of the main pulse input signal S1 that is input from the discharge gap detector 6 as the predetermined distance is covered by electric discharge machining. Since the main pulse generator 1 outputs main pulses in response to the main pulse input signal S1, the main pulse counter 12 that receives the input signal S1 from the discharge gap detector 6 counts the main pulses. Based on the signal from the machining distance computing device 11, the counter 12 outputs the count number of the main pulses to the immediately preceding main pulse number storage device 13 and the thickness change detector 14.

The immediately preceding main pulse number storage device 13 temporarily stores the number of main pulses counted by the main pulse counter 12. In response to the signal (predetermined distance detection signal S2) from the machining distance computing device 11, the storage device 13 receives and stores the latest count number of the main pulses from the counter 12 and delivers the immediately previously stored count number of the main pulses to the thickness change detector 14.

The thickness change detector 14 detects a thickness change of the workpiece 5, based on the immediately preceding count number of the main pulses received from the immediately preceding main pulse number storage device 13 and the count number of the main pulses received last from the main pulse counter 12.

A set discharge quiescent time storage device 15 stores data on a discharge quiescent time and outputs the stored data on the discharge quiescent time to a discharge quiescent time controller 16. The controller 16 controls the discharge quiescent time based on information on the thickness change received from the thickness change detector 14 and the set discharge quiescent time stored in the set discharge quiescent time storage device 15.

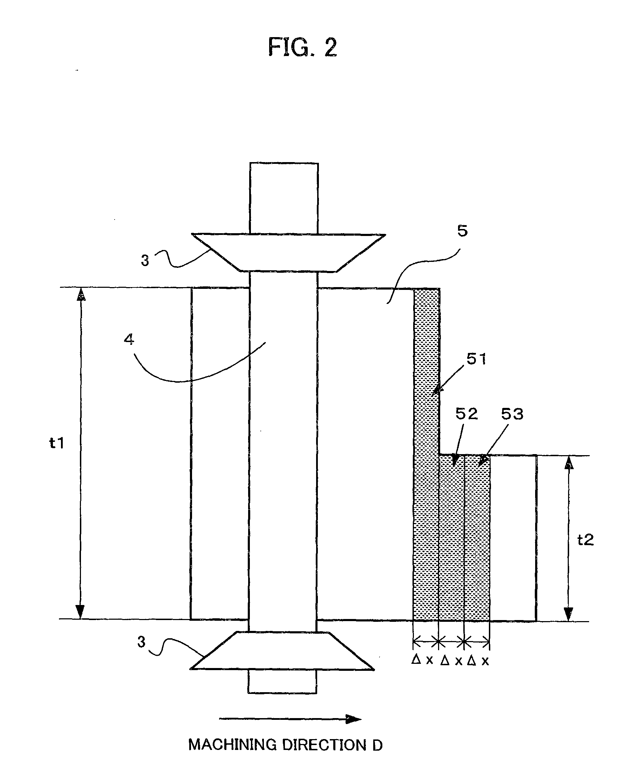

FIG. 2 is a diagram illustrating how the workpiece 5 is machined in the direction from its thick part to thin part by the wire-cut electric discharge machine. The following is a description of an operation for machining the workpiece 5 having a step portion, such as the one shown in FIG. 2.

The wire electrode 4 moves relative to the workpiece 5 in a machining direction D (X-axis direction). Symbol $\Delta x$ represents the predetermined distance. Reference numerals 51, 52 and 53 denote segments n, n+1, and n+2, respectively. When the wire electrode 4 is located in the segment n (51), the wire-cut electric discharge machine works the thick part (with a thickness t1) of the workpiece 5. When the wire electrode 4 is located in the segment n+1 (52) or n+2 (53), on the other hand, the electric discharge machine works the thin part (with a thickness t2) of the workpiece 5.

If the numbers of main pulses counted by the main pulse counter 12 when the segments n (51), n+1 (52), and n+2 (53) are machined by the wire electrode 4 are P(n), P(n+1), and P(n+2), respectively, we have

$$P(n) > P(n+1) = P(n+2). \qquad\qquad ...... (1)$$

Since the diameter of the wire electrode 4 is constant during electric discharge machining, the count number of the main pulses depends on the thickness of the workpiece 5 if the amount of machining transversely relative to machined grooves is constant. Therefore, expression (1) can be said to represent the relationship between the thicknesses of the workpiece 5 in the individual segments. If the thickness is great, the amount of machining and hence the number of main pulses are also great. If the thickness is small, on the other hand, the amount of machining and the number of main pulses are small.

The machining distance computing device 11 outputs the signal S2 every time the wire electrode 4 moves for the predetermined distance (Δx in FIG. 2) relative to the workpiece 5. On receipt of this signal S2 from the machining distance computing device 11, the main pulse counter 12 outputs the main pulse number P(n) counted thereby to the immediately preceding main pulse number storage device 13. Further, the main pulse counter 12 is reset, and counting the next number of main pulses is started.

After the wire electrode 4 finishes working the segment n (51) of the workpiece 5 shown in FIG. 2, it moves to the segment n+1 (52). When the wire electrode 4 finishes working the segment n+1 (52) (that is, if the predetermined distance Δx is covered), the signal S2 is output from the machining distance computing device 11 to the main pulse counter 12 and the thickness change detector 14. Thereupon, the main pulse number P(n+1) is output from the main pulse counter 12 to the immediately preceding main pulse number storage device 13 and the thickness change detector 14. At the same time, the main pulse number P(n) stored as an immediately preceding main pulse number is output from the immediately preceding main pulse number storage device 13 to the thickness change detector 14.

On receipt of the main pulse number P(n) as the immediately preceding main pulse number and the main pulse number P(n+1) as the latest main pulse number, the thickness change detector 14 calculates a difference, P(n) - P(n+1), between the pulse numbers and determines the thickness change of the workpiece 5 based on the result of the calculation. If the thickness change of the workpiece 5 is detected, the thickness change detector 14 outputs a thickness change detection signal to the discharge quiescent time controller 16.

The discharge quiescent time controller 16 receives from the set discharge quiescent time storage device 15 data on a set discharge quiescent time Toff(s) set based on machining conditions. This discharge quiescent time controller 16 calculates a discharge quiescent time Toff(n+1) by performing, for example, the following computing operation and controls pulse generation by the detection voltage generator 2 in accordance with the calculated discharge quiescent time Toff(n+1):

$$\mathrm{Toff(n+1) \ = \ Toff(s) \times \{1 \ + \ K \times |P(n) \ - \ P(n+1)|/P(n)\}, \qquad \text{...... (2)}}$$

where K is a positive real number as a coefficient.

Equation (2) indicates that the discharge quiescent time Toff(n+1) is controlled to be longer than the set discharge quiescent time Toff(s) when the machining progresses from the segment n (51) to the segment n+1 (52), that is, from the thick part (t1) to the thin part (t2), of the workpiece 5. Equation (2) also indicates that the discharge quiescent time is equal to the set discharge quiescent time Toff(s) if the thickness does not change in case where, for example, the machining progresses from the segment n+1 (52) to the segment n+2 (53). This is because the value of |P(n+1) - P(n+2)| corresponding to |P(n) - P(n+1)| of equation (2) is zero. If the discharge quiescent time extends, electric discharge energy is reduced.

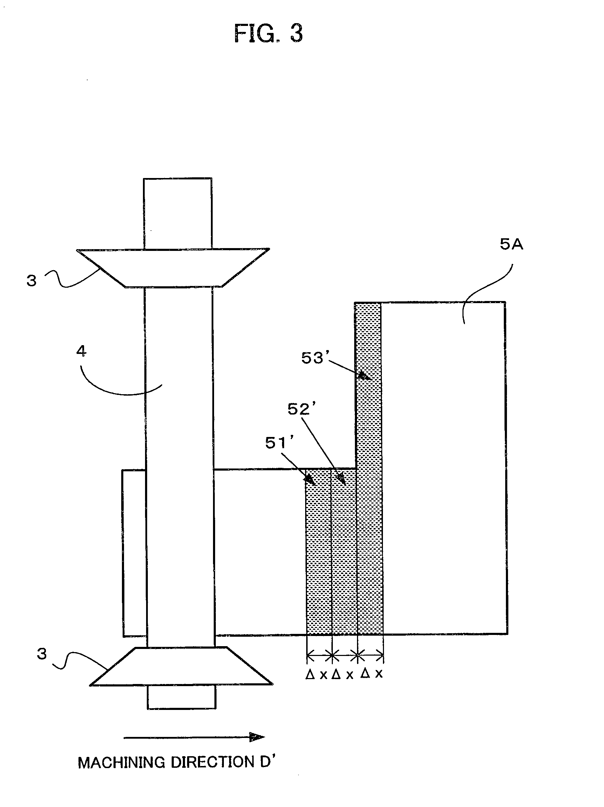

The absolute value of the thickness change, P(n) - P(n+1), is used in equation (2). By doing this, the discharge quiescent time can be controlled to be longer than the set discharge quiescent time Toff(s) both when the machining progresses from the thick part of the workpiece 5 to the thin part, as shown in FIG. 2, and when the machining progresses from the thin part of the workpiece 5 to the thick part, as shown in FIG. 3.

FIG. 3 is a diagram illustrating how machining is progressed from the thin part of the workpiece to the thick part. In a machining direction D' shown in FIG. 3, the wire electrode 4 relatively moves from a thin part of a workpiece 5A to a thick part. As mentioned before, the absolute value of the thickness change, P(n) - P(n+1), is used in equation (2). If the thickness of the workpiece changes in the manner shown in FIG. 3, therefore, the discharge quiescent time can be controlled to be longer than the set discharge quiescent time Toff(s).

In regions where the thickness of the workpiece 5 is not changed by the above control (adjustment of the length of the discharge quiescent time), the electric discharge machining is progressed with a constant discharge quiescent time (set discharge quiescent time stored in the set discharge quiescent time storage device 15). In a region where the thickness of the workpiece 5 changes (either increases or decreases), on the other hand, the discharge quiescent time is extended to reduce electric discharge energy.

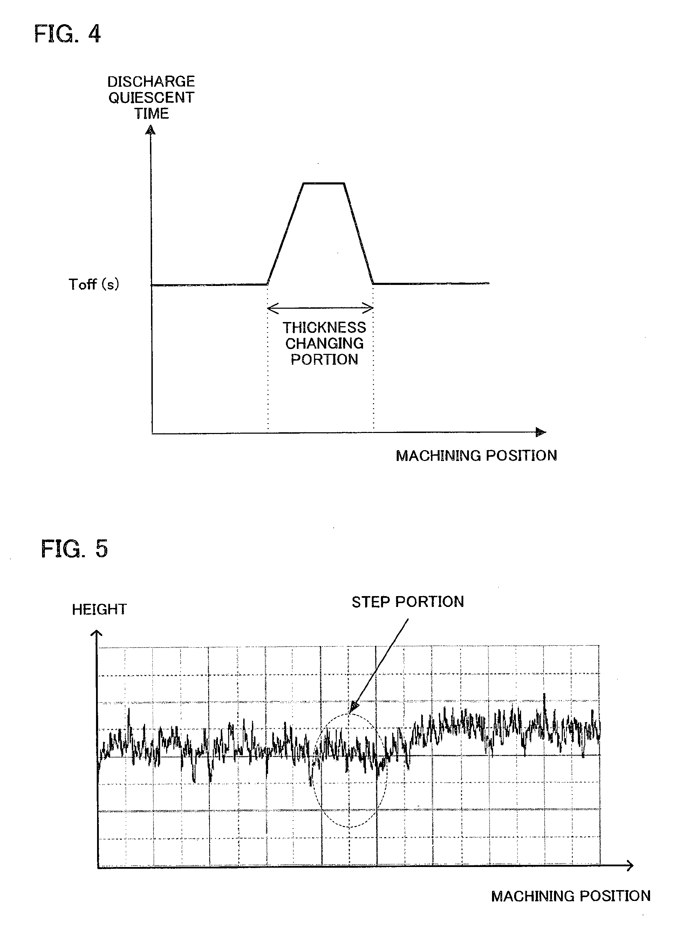

FIG. 4 is a diagram illustrating the change of the discharge quiescent time in the region where the thickness of the workpiece changes, as shown in FIGS. 2 and 3, and indicates that the discharge quiescent time is extended only in the region (thickness changing portion) where the thickness changes. In FIG. 4, a trapezoidal section represents a state in which the discharge quiescent time in the thickness changing portion is extended. This section is formed depending on the diameter of the wire electrode 4 because the area in which the wire electrode 4 faces the workpiece 5 gradually changes as the wire electrode moves relative to the workpiece, ranging from a position just short of the step portion to a position just beyond the step portion.

FIG. 5 is a diagram qualitatively illustrating the result of a measurement of a profile of a step portion of the workpiece 5, which is machined by the wire-cut electric discharge machine of the present invention, by means of a surface roughness meter. As mentioned before, on the other hand, FIG. 16 is a diagram qualitatively illustrating the result of the measurement of the depth of the streak 50 (FIG. 15) in the step portion of the workpiece, which is machined by the conventional wire-cut electric discharge machine, by means of the surface roughness meter. As seen from the comparison between FIGS. 5 and 16, the depth of streaks in the step portion is reduced in the electric discharge machining by the wire-cut electric discharge machine of the present invention.

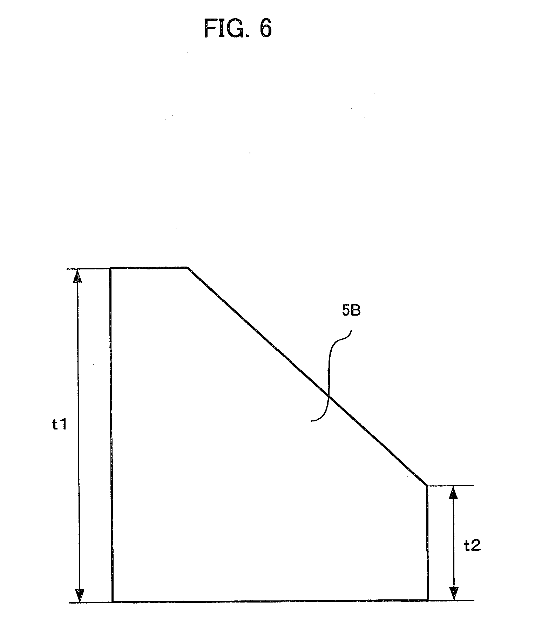

According to the first embodiment described above, moreover, adjustment of the machining conditions given by equation (2) (adjustment of the length of the discharge quiescent time during which application of the inter-electrode voltage is halted) is performed every time the machining is progressed for the predetermined distance. Alternatively, however, the machining conditions of equation (2) may be adjusted when a certain threshold value is exceeded by |P(n) - P(n+1)|. Thus, in machining a workpiece 5B with its thickness smoothly changed (from t1 to t2) without a sudden change, as shown in FIG. 6, the discharge quiescent time may be adjusted to the set discharge quiescent time Toff(s) without being extended in the aforementioned manner.

According to the present invention, the thickness change of the workpiece is detected based on energy input from a machining power source unit. If the thickness change is detected, the machining conditions are adjusted so that the energy input from the machining power source unit is reduced. In the first embodiment of the present invention, the thickness change of the workpiece is detected based on the number of pulses (as energy) input from the machining power source unit. If the thickness change is detected based on the pulse number, the discharge quiescent time (as a machining condition) is adjusted so that the energy input from the machining power source unit is reduced.

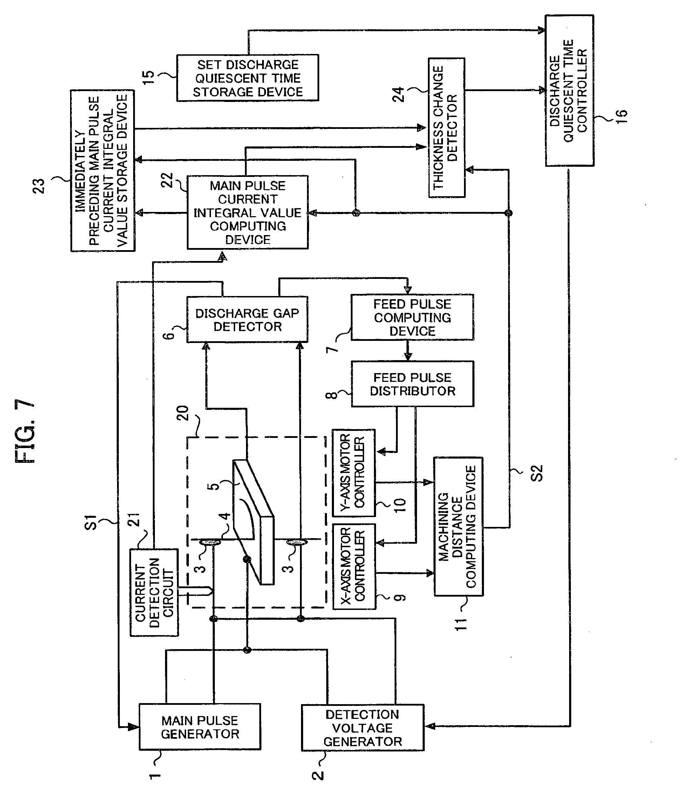

A second embodiment of the wire-cut electric discharge machine according to the present invention will now be described with reference to FIG. 7. This embodiment is characterized in that a thickness change of a workpiece is detected based on an integral value of a main pulse current generated from a main pulse generator 1. In FIG. 7, the same reference numerals are used for component parts identical with those in the first embodiment shown in FIG. 1.

The second embodiment differs from the first embodiment in that a thickness change detector 24 obtains the thickness change of the workpiece 5, based on a difference between main pulse integral values before and after a movement of a predetermined distance, every time a wire electrode 4 moves for the predetermined distance relative to the workpiece 5. As shown in FIG. 7, therefore, the wire-cut electric discharge machine according to the second embodiment comprises a current detection circuit 21 as a circuit for detecting a discharge current, and further comprises a main pulse current integral value computing device 22 and an immediately preceding main pulse current integral value storage device 23, in place of the main pulse counter 12 and the immediately preceding main pulse number storage device 13 of the wire-cut electric discharge machine (FIG. 1) of the first embodiment.

If the thickness change of the workpiece is detected based on a main pulse current integral value (as energy) input from a machining power source unit, according to the second embodiment arranged in this manner, a discharge quiescent time (as a machining condition) is adjusted so that the energy input from the machining power source unit is reduced.

A machining distance computing device 11 outputs a signal S2 to the main pulse current integral value computing device 22, immediately preceding main pulse current integral value storage device 23, and thickness change detector 24 every time the wire electrode 4 moves the predetermined distance relative to the workpiece 5. The main pulse current integral value computing device 22 integrates the value of the discharge current (main pulse current) detected by the current detection circuit 21 while the signal S2 is output from the machining distance computing device 11 every time the machining is progressed the predetermined distance. The resulting integral value is output to the immediately preceding main pulse current integral value storage device 23 and the thickness change detector 24.

In response to the signal S2 output from the machining distance computing device 11, the immediately preceding main pulse current integral value storage device 23 fetches and stores the main pulse current integral value obtained by the main pulse current integral value computing device 22, and outputs an immediately preceding main pulse current integral value stored immediately previously to the thickness change detector 24.

Every time the signal S2 is output from the machining distance computing device 11, the thickness change detector 24 detects the thickness change of the workpiece, based on integral values input individually from the main pulse current integral value computing device 22 and the immediately preceding main pulse current integral value storage device 23.

The following is a description of operations of the machining distance computing device 11, current detection circuit 21, main pulse current integral value computing device 22, immediately preceding main pulse current integral value storage device 23, and thickness change detector 24 of the wire-cut electric discharge machine shown in FIG. 7.

If the signal S2 is output from the machining distance computing device 11, the latest main pulse current integral value Q(n+1) calculated in the main pulse current integral value computing device 22 and an immediately preceding main pulse current integral value Q(n) stored in the immediately preceding main pulse current integral value storage device 23 are output to the thickness change detector 24. Further, the latest main pulse current integral value Q(n+1) calculated in the main pulse current integral value computing device 22 is stored in the immediately preceding main pulse current integral value storage device 23.

The thickness change detector 24 calculates a difference, Q(n) - Q(n+1), between the latest main pulse current integral value Q(n+1) output from the main pulse current integral value computing device 22 and the immediately preceding main pulse current integral value Q(n) output from the immediately preceding main pulse current integral value storage device 23 and detects the thickness change of the workpiece 5.

If the thickness change detector 24 detects the thickness change of the workpiece 5, the thickness change detector 24 outputs a thickness change detection signal to a discharge quiescent time controller 16. The discharge quiescent time controller 16 receives from a set discharge quiescent time storage device 15 data on a set discharge quiescent time Toff(s) set based on machining conditions. This discharge quiescent time controller 16 calculates a discharge quiescent time Toff(n+1) by performing, for example, the following computing operation and controls pulse generation by a detection voltage generator 2 in accordance with the calculated discharge quiescent time Toff(n+1):

$$\mathrm{Toff(n+1) = Toff(s) \times \{1 + K \times |Q(n) - Q(n+1)|/Q(n)\}, \qquad \cdots\cdots \ (3)}$$

where K is a positive real number as a coefficient.

Equation (3) indicates that the discharge quiescent time Toff(n+1) is controlled to be longer than the set discharge quiescent time Toff(s) when the machining progresses from the segment n (51) to the segment n+1 (52), that is, from the thick part (t1) to the thin part (t2), of the workpiece 5. Equation (3) also indicates that the discharge quiescent time is equal to the set discharge quiescent time Toff(s) if the thickness does not change in case where, for example, the machining progresses from the segment n+1 (52) to the segment n+2 (53). This is because the value of |Q(n+1) - Q(n+2)| corresponding to |Q(n) - Q(n+1)| of equation (3) is zero. If the discharge quiescent time extends, electric discharge energy is reduced.

The absolute value of the thickness change, Q(n) - Q(n+1), is used in equation (3). By doing this, the discharge quiescent time can be controlled to be longer than the set discharge quiescent time Toff(s) both when the machining progresses from the thick part of the workpiece 5 to the thin part, as shown in FIG. 2, and when the machining progresses from the thin part of the workpiece 5 to the thick part, as shown in FIG. 3.

In regions where the thickness of the workpiece 5 is not changed by the above control (adjustment of the length of the discharge quiescent time), the electric discharge machining is progressed with a constant discharge quiescent time (set discharge quiescent time stored in the set discharge quiescent time storage device 15). In a region where the thickness of the workpiece 5 changes (either increases or decreases), on the other hand, the discharge quiescent time is made longer than the set discharge quiescent time to reduce electric discharge energy. The relationship between the machining position and discharge quiescent time is shown in FIG. 4.

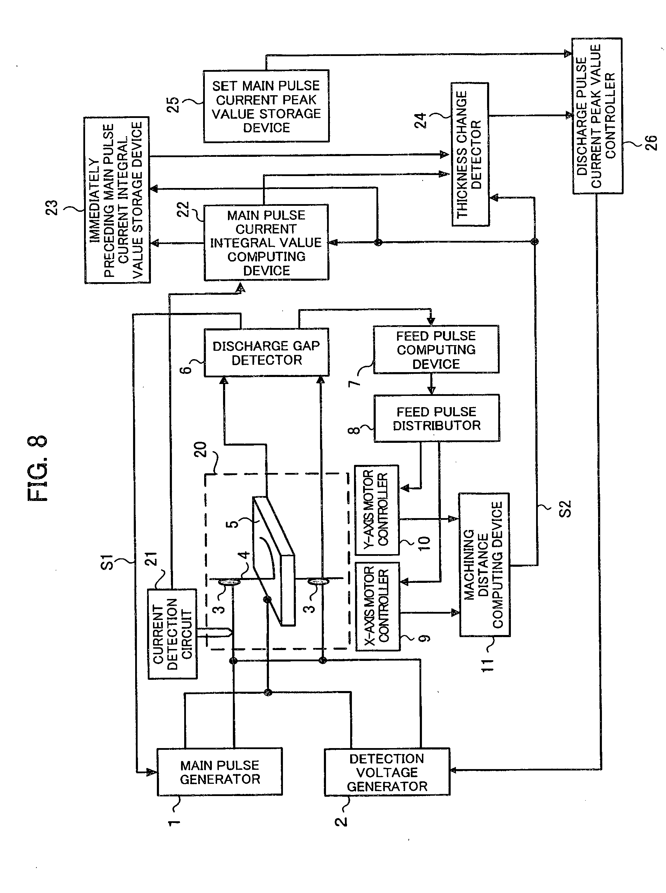

A third embodiment of the wire-cut electric discharge machine according to the present invention will now be described with reference to FIG. 8. This embodiment differs from the second embodiment in that machining conditions are set by controlling a current peak value of main pulses output from a main pulse generator 1, instead of controlling the discharge quiescent time. In the wire-cut electric discharge machine shown in FIG. 8, a set main pulse current peak value storage device 25 and a discharge pulse current peak value controller 26 are used in place of the set discharge quiescent time storage device 15 and the discharge quiescent time controller 16, respectively, of the wire-cut electric discharge machine shown in FIG. 7. In FIG. 8, like the same reference numerals are used for component parts identical with those of the wire-cut electric discharge machine shown in FIG. 7.

In the third embodiment, a set main pulse current peak value Ip(s) is stored in the set main pulse current peak value storage device 25. The discharge pulse current peak value controller 26 receives from the set main pulse current peak value storage device 25 data on the set main pulse current peak value Ip(s) set based on the machining conditions.

The discharge pulse current peak value controller 26 calculates a discharge pulse current peak value Ip(n+1) by performing, for example, the following computing operation and controls the peak value of the main pulses generated from the main pulse generator 1 in accordance with the calculated discharge pulse current peak value Ip(n+1):

$$\mathrm{Ip(n+1) = Ip(s) \times \{1 + K \times |Q(n) - Q(n+1)|/Q(n)\}, \qquad \cdots\cdots \ (4)}$$

where K is a negative real number as a coefficient.

In controlling the discharge pulse current peak value, K in equation (4) is used as a negative number because electric discharge energy is reduced if the discharge pulse current peak value is reduced.

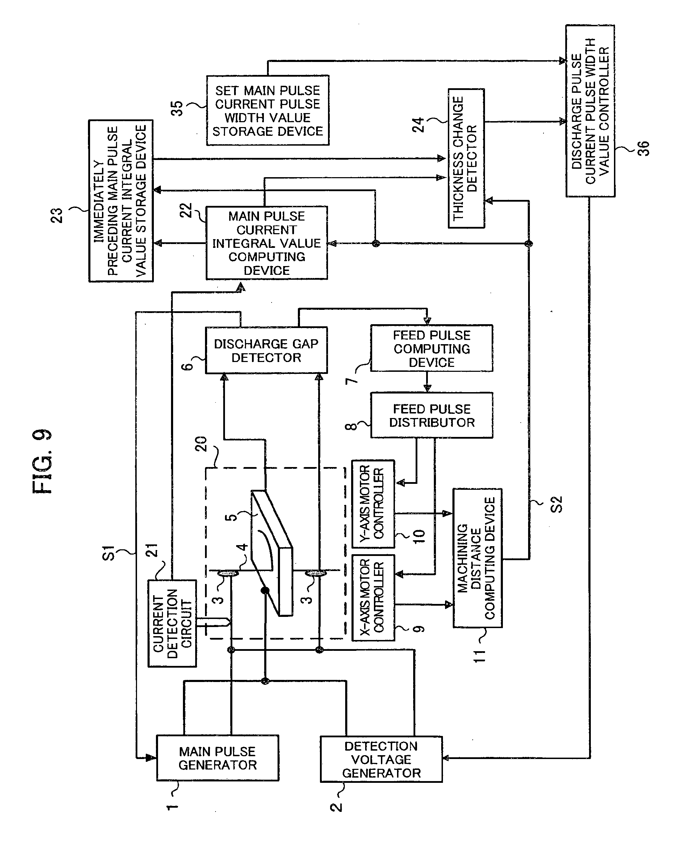

A fourth embodiment of the wire-cut electric discharge machine according to the present invention will now be described with reference to FIG. 9. This embodiment differs from the third embodiment (FIG. 8) in that machining conditions are set based on the current pulse width of main pulses output from a main pulse generator 1, instead of being set by controlling the current peak value of the main pulses. In the wire-cut electric discharge machine shown in FIG. 9, a set main pulse current pulse width value storage device 35 and a discharge pulse current pulse width value controller 36 are used in place of the set main pulse current peak value storage device 25 and the discharge pulse current peak value controller 26, respectively, of the wire-cut electric discharge machine shown in FIG. 8.

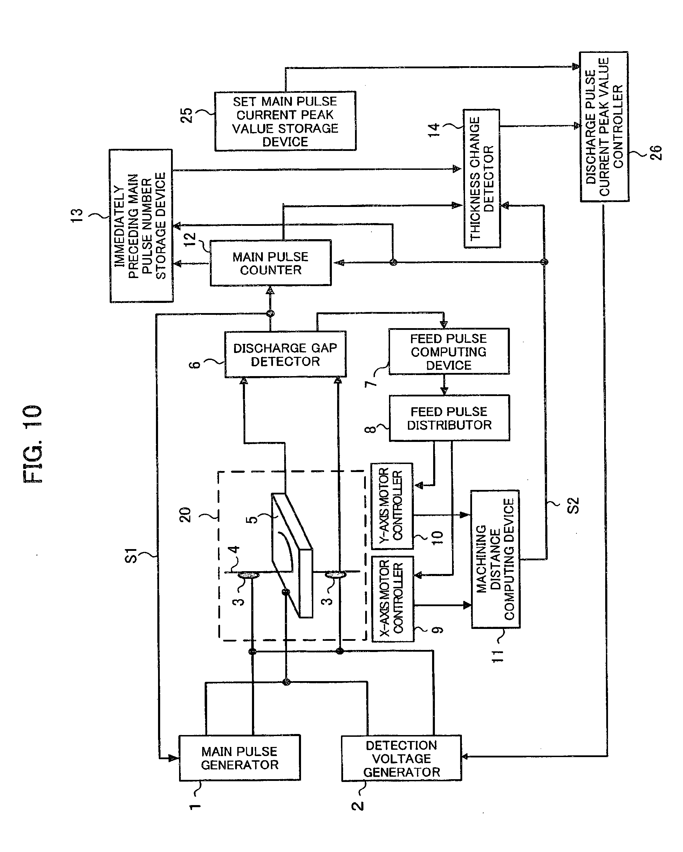

A fifth embodiment of the wire-cut electric discharge machine according to the present invention will now be described with reference to FIG. 10. In this embodiment, the detection of the thickness change of a workpiece according to the third embodiment (FIG. 8) is performed by means of the thickness change detector 14 of the first embodiment (FIG. 1), that is, the thickness change of the workpiece is detected based on the difference between the immediately preceding and the latest main pulse numbers P(n) and P(n+1).

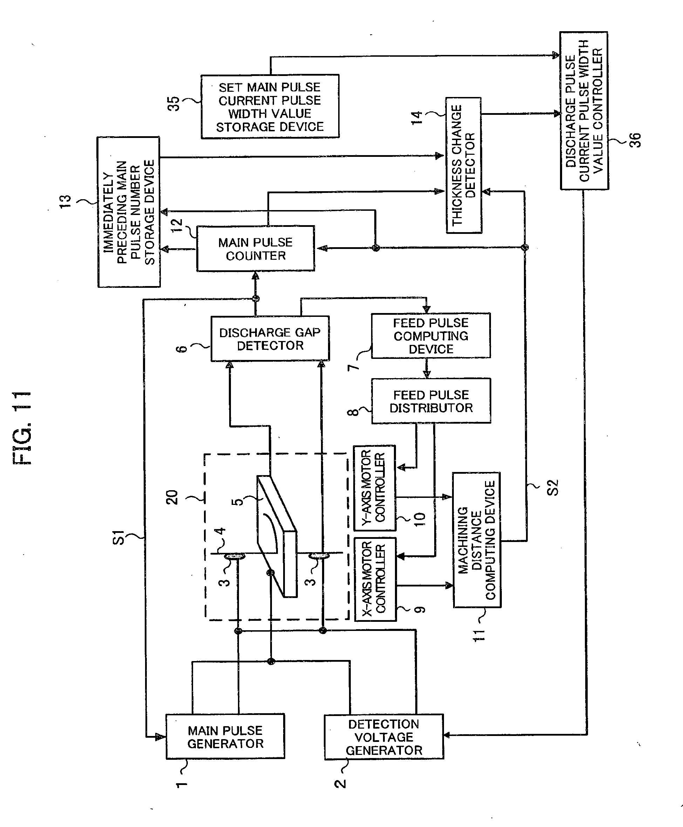

A sixth embodiment of the wire-cut electric discharge machine according to the present invention will now be described with reference to FIG. 11. In this embodiment, the detection of the thickness change of a workpiece according to the fourth embodiment (FIG. 9) is performed by means of the thickness change detector 14 of the first embodiment (FIG. 1), that is, the thickness change of the workpiece is detected based on the difference between the immediately preceding and the latest main pulse numbers P(n) and P(n+1).

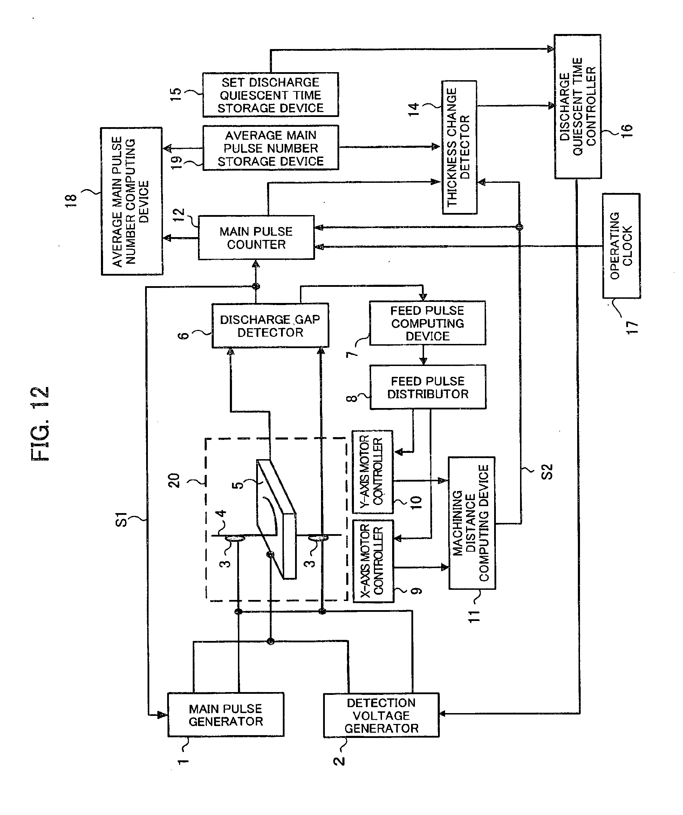

A seventh embodiment of the wire-cut electric discharge machine according to the present invention will now be described with reference to FIG. 12. In this embodiment, an average main pulse number computing device 18 is used in place of the immediately preceding main pulse number storage device 13 of the first embodiment (FIG. 1), and an operating clock 17 and an average main pulse number storage device 19 are additionally used. Based on this arrangement, the thickness change of a workpiece is detected based on an average main pulse number.

The operating clock 17 outputs a signal to a main pulse counter 12 for each predetermined unit time, thereby notifying the passage of the unit time. The main pulse counter 12 receives a main pulse number from a discharge gap detector 6, counts main pulses per unit time, and delivers the count number to a thickness change detector 14. Further, the main pulse counter 12 counts main pulses for each predetermined distance, also simultaneously measures the time required for the counting, and delivers the number of main pulses for each predetermined distance and the time required for machining for the predetermined distance to the average main pulse number computing device 18.

Based on the number of main pulses for each predetermined distance and the time required for the machining for the predetermined distance received from the main pulse counter 12, the average main pulse number computing device 18 calculates the average main pulse number per unit time and delivers the calculated average main pulse number to the average main pulse number storage device 19. The storage device 19 stores the average main pulse number received from the computing device 18 and delivers the stored average main pulse number to the thickness change detector 14.

In this embodiment, as mentioned before, the number of pulses of the pulse current is used to detect the thickness change of the workpiece. However, the thickness change of the workpiece may be detected by using an integral value of the pulse current in place of the number of pulses. In this case, the wire-cut electric discharge machine of the second embodiment shown in FIG. 7 should only be modified so as to comprise an operating clock, average main pulse current computing device, and average main pulse current storage device.

The thickness change detector 14 detects the thickness change of the workpiece by the average main pulse number received from the average main pulse number storage device 19 and the main pulse number per unit time received from the main pulse counter 12. Information on the thickness change of the workpiece 5 is delivered from the thickness change detector 14 to the discharge quiescent time controller 16.

According to each of the embodiments of the present invention described above, electric discharge energy is locally controlled in a restricted area where the thickness of the workpiece changes, and predetermined electric discharge energy is restored for machining in areas where the thickness does not change. Thus, finish machining can be considered to be performed with constant electric discharge energy, so that finish machining conditions can be satisfied to obtain uniform smooth machined surfaces.

A no-load machining time can be adjusted to regulate the amount of energy input from the main pulse generator 1 through adjustment of a set voltage in servo feed control based on the thickness change of the workpiece, as well as through adjustment of the machining conditions (adjustment of the amount of energy to be input to the machining gap according to the embodiments described herein.

Since the energy is not directly changed in this case, streaks produced in the step portion during the finish machining can be reduced, although the presence of secondary discharge entails some reduction in accuracy. Specifically, the set voltage is equal to an average machining voltage Vm in the servo control for feedback control such that the average machining voltage in the machining gap between the wire electrode and the workpiece agrees with the set voltage. This average machining voltage Vm is given as follows:

$$Vm(n) = V \times Tw(n)/(Tw(n) + Toff), \qquad \text{......} \quad (5)$$

where $Vm(n)$ is an average machining voltage, $V$ is a no-load peak voltage, $Tw(n)$ is the no-load machining time, and Toff is the off time.

FIG. 13 is a diagram illustrating the relationships between the no-load peak voltage $V$, average machining voltage $Vm$, no-load machining time $Tw$, and off time Toff.

Equation (5) indicates that if the no-load peak voltage $V$ and the off time Toff are constant, the higher the average machining voltage $Vm(n)$, the longer the no-load machining time $Tw(n)$ is. Since the set voltage for the servo feed control is equal to the average machining voltage $Vm(n)$, as mentioned before, moreover, the no-load machining time $Tw(n)$ can be regulated by adjusting the set voltage. Consequently, the amount of energy input from the main pulse generator 1 can be adjusted.

By way of example, the set voltage for the absolute value of the difference in thickness (represented as the difference in the main pulse count number or the difference in the integral value of the main pulse current) is previously determined in the form of an evaluation function or table. Then, in actual machining, the set voltage may be changed in response to the thickness change so that the average machining voltage in the machining gap can be adjusted. By doing this, the no-load machining time $Tw(n)$ may be adjusted to regulate the electric discharge energy. Specifically, the set voltage may be set to be relatively low when the thickness changes, thereby increasing the no-load machining time $Tw(n)$ and the main pulse generation interval. Thus, the electric discharge energy can be temporarily reduced.

In the servo feed control, the feed rate of the wire electrode relative to the workpiece is feedback-controlled so that a set voltage agree with an average machining voltage, and this feed rate is determined according to a deviation between the set voltage and the average machining voltage. So, even when there is no change in the deviation of voltage, the feed rate can be changed by changing a gain (that is, a feedback gain for the servo feed control) by which the deviation is multiplied for obtaining the feed rate. If the feed rate changes in this manner, the no-load machining time $Tw(n)$ also changes. Thus, the electric discharge energy may be temporarily reduced by adjusting the main pulse generation interval.

By way of example, the feedback gain for servo feed corresponding to the difference in thickness (represented as the difference in the main pulse count number or the difference in the integral value of the main pulse current) is previously determined in the form of an evaluation function or table. Then, in actual machining, the gain may be adjusted corresponding to the rate of thickness change so that the gain and the average machining voltage in the gap can be adjusted to regulate the electric discharge energy. Specifically, the gain may be reduced to lower the feed rate for the thickness change, thereby increasing the no-load machining time $Tw(n)$ and the main pulse generation interval. Thus, the electric discharge energy can be temporarily reduced.

If the machining is not subjected to the servo feed control but is controlled at a programmed feed rate, for example, the programmed feed rate should only be adjusted in accordance with the thickness change. For example, the feed rate may be changed depending on the thickness change in such a manner that electric discharge is first performed at the programmed feed rate, the thickness change is obtained, and the programmed feed rate is changed into the one corresponding to the thickness change. If the thickness is changed by doing this, the new feed rate is reduced. Consequently, the no-load machining time $Tw(n)$ and the main pulse generation interval may be increased so that the electric discharge energy can be temporarily reduced.

## Claims

1. A wire-cut electric discharge machine which performs multi-path electric discharge machining by inputting a pulse current to a machining gap between a wire electrode (4) and a workpiece (5) from a machining power source unit, comprising:

   machining distance computing means (11) which calculates an amount of movement of the wire electrode (4) relative to the workpiece (5) for each predetermined distance;
   energy calculating means for calculating energy input from the machining power source unit during electric discharge machining for the predetermined distance calculated by the machining distance computing means (11);
   thickness change detecting means (14, 24) which detects a change in the thickness of the workpiece (5) based on the energy calculated by the energy calculating means; and
machining condition adjusting means, **characterized in that**:
the machining condition adjusting means is configured to issue a command for a preset machining condition if it is detected by the thickness change detecting means that the thickness is not changed and to adjust the machining condition so that the energy input from the machining power source unit is temporarily reduced in a region where the thickness of the workpiece changes if it is detected by the thickness change detecting means (14, 24) that the thickness is changed, such that discharge energy is locally controlled in a restricted area where the thickness of the workpiece changes, and predetermined electric discharge energy is restored for machining in areas where the thickness does not change.

2. The wire-cut electric discharge machine according to claim 1, wherein the machining condition adjusting means is configured to adjust the machining condition so that the energy input from the machining power source unit is reduced as a function of the absolute value of the thickness change detected by the thickness change detecting means (14, 24) if it is detected that the thickness is changed.

3. The wire-cut electric discharge machine according to claim 1 or 2, which further comprises immediately preceding input energy storage means for storing the energy calculated by the energy calculating means during the electric discharge machining for the predetermined distance immediately previously calculated by the machining distance computing means (11), wherein the thickness change detecting means (14, 24) obtains the thickness change of the workpiece (5), based on the input energy calculated by the energy calculating means and the input energy stored in the immediately preceding input energy storage means, every time the predetermined distance is calculated by the machining distance computing means (11).

4. The wire-cut electric discharge machine according to any of claims 1 to 3, wherein the energy input from the machining power source unit, which is calculated by the energy calculating means, is the number of pulses of the pulse current input from the machining power source unit.

5. The wire-cut electric discharge machine according to any of claims 1 to 3, wherein the energy input from the machining power source unit, which is calculated by the energy calculating means, is an integral value of the pulse current input from the machining power source unit.

6. The wire-cut electric discharge machine according to anyone of claims 1 to 5, wherein the machining condition adjusting means adjusts the energy input from the machining power source unit by adjusting the length of a discharge quiescent time during which application of a voltage to the machining gap between the wire electrode (4) and the workpiece (5) is halted, based on the thickness change of the workpiece (4), thereby regulating the energy input from the machining power source unit.

7. The wire-cut electric discharge machine according to claim 6, wherein the machining condition adjusting means adjusts the length of a discharge quiescent time according to the formula:

$$\text{Toff}(n+1) = \text{Toff}(s) \times \{1 + K \times \left| P(n)\text{-}P(n+1) \right| / P(n)\}$$

or

$$\text{Toff}(n+1) = \text{Toff}(s) \times \{1 + K \times \left| Q(n)\text{-}Q(n+1) \right| / Q(n)\}$$

wherein:

Toff is the discharge quiescent time;
K is a positive real number coefficient;
P is the main pulse number of the corresponding segment; and
Q is the main pulse current integral value of the corresponding segment.

8. The wire-cut electric discharge machine according to any of claims 1 to 5, wherein the machining condition adjusting means adjusts the energy input from the machining power source unit by adjusting the discharge pulse current peak value of the main pulses generated from the main pulse generator (1), based on the thickness change of the workpiece (5) detected by the thickness change detecting means (14, 24), thereby regulating the energy input from the machining power source unit.

9. The wire-cut electric discharge machine according to claim 8, wherein the machining condition adjusting means adjusts the discharge pulse current peak value according to the formula:

$$Ip(n+1) = Ip(s) \times \{1 + K \times \left| Q(n)\text{-}Q(n+1) \right| \; / \; Q(n)\}$$

wherein:

Ip is the discharge pulse current peak value;
K is a negative real number coefficient; and
Q is the main pulse current integral value of the corresponding segment.

10. The wire-cut electric discharge machine according to any of claims 1 to 9, wherein the thickness change detecting means concludes that the thickness is changed when a predetermined value is exceeded by the detected thickness change.

**Patentansprüche**

1. Elektrische Drahterodiermaschine, die ein Mehrfachpfad-elektrisches Erodierverfahren ausführt durch Eingabe eines Pulsstroms in eine Bearbeitungslücke zwischen einer Drahtelektrode (4) und einem Arbeitsstück (5) aus einer Bearbeitungs-Energiequelleneinheit, umfassend
Mittel zum Berechnen der Bearbeitungsentfernung (11), das eine Bewegungsmenge von der Drahtelektrode (4) gegenüber dem Arbeitsstück (5) für jede vorbestimmte Entfernung berechnet;
Energieberechnungsmittel zum Berechnen einer Energieeingabe von der Bearbeitungs-Energiequelleneinheit während elektrischen Erodierverfahrens für die vom Mittel zum Berechnen der Bearbeitungsentfernung (11) berechnete vorbestimmte Entfernung;
Mittel zum Erfassen einer Stärkenvariation (14, 24), das eine Variation der Stärke des Arbeitsstücks (5) erfasst, auf der Basis der vom Energieberechnungsmittel berechneten Energie; und
Mittel zum Anpassen der Bearbeitungsbedingungen,
**dadurch gekennzeichnet, dass**
das Mittel zum Anpassen der Bearbeitungsbedingungen ausgelegt ist zum Ausgeben eines Befehls für eine vorbestimmte Bearbeitungsbedingung, wird vom Mittel zum Erfassen einer Stärkenvariation erfasst, dass die Stärke nicht variiert hat, und zum Anpassen der Bearbeitungsbedingung, so dass die von der Bearbeitungs-Energiequelleneinheit eingegebene Energie zeitweilig verringert wird in einem Bereich, wo die Stärke des Arbeitsstücks variiert, wird vom Mittel zum Erfassen einer Stärkenvariation (14, 24) erfasst, dass die Stärke variiert hat, so dass Entladungsenergie lokal in einem eingegrenzten Bereich gesteuert wird, wo die Stärke des Arbeitsstücks variiert, und vorbestimmte elektrische Entladungsenergie wiederhergestellt wird für Bearbeitung in Bereichen, wo die Stärke nicht variiert.

2. Elektrische Drahterodiermaschine gemäß Anspruch 1, wobei das Mittel zum Anpassen der Bearbeitungsbedingungen ausgelegt ist zum Anpassen der Bearbeitungsbedingung, so dass die von der Bearbeitungs-Energiequelleneinheit eingegebene Energie verringert wird als Funktion des Absolutbetrags der vom Mittel zum Erfassen einer Stärkenvariation (14, 24) erfassten Stärkenvariation, wird erfasst, dass die Stärke variiert hat.

3. Elektrische Drahterodiermaschine gemäß Anspruch 1 oder 2, die zudem direkt vorangehend umfasst Mittel zum Ablegen der Energieeingabe für das Ablegen der vom Energieberechnungsmittel berechneten Energiemenge während des elektrischen Drahterodierens für eine direkt davor vom Mittel zum Berechnen der Bearbeitungsentfernung (11) berechnete vorbestimmte Entfernung, wobei das Mittel zum Erfassen einer Stärkenvariation (14, 24) die Stärkenvariation des Arbeitsstücks (5) erhält, auf der Basis der vom Energieberechnungsmittel berechneten Energieeingabe und der im direkt vorangehenden Mittel zum Ablegen der Energieeingabe abgelegten Energieeingabe, jedes Mal, wenn die vorbestimmte Entfernung vom Mittel zum Berechnen der Bearbeitungsentfernung (11) berechnet wird.

**4.** Elektrische Drahterodiermaschine gemäß irgendeinem der Ansprüche 1 bis 3, wobei die von der Bearbeitungs-Energiequelleneinheit eingegebene Energie, die vom Energieberechnungsmittel berechnet wird, die Anzahl Pulse des von der Bearbeitungs-Energiequelleneinheit eingegebenen Pulsstroms ist.

**5.** Elektrische Drahterodiermaschine gemäß irgendeinem der Ansprüche 1 bis 3, wobei die von der Bearbeitungs-Energiequelleneinheit eingegebene Energie, die vom Energieberechnungsmittel berechnet wird, ein Integralwert des von der Bearbeitungs-Energiequelleneinheit eingegebenen Pulsstroms ist.

**6.** Elektrische Drahterodiermaschine gemäß irgendeinem der Ansprüche 1 bis 5, wobei das Mittel zum Anpassen der Bearbeitungsbedingungen die von der Bearbeitungs-Energiequelleneinheit eingegebene Energie anpasst durch Anpassen der Länge einer Entladungs-Ruhezeit, während welcher Anlegen einer Spannung auf die Bearbeitungslücke zwischen der Drahtelektrode (4) und dem Arbeitsstück (5) unterbrochen wird, auf der Basis der Stärkenvariation des Arbeitsstücks (4), um so die Energieeingabe von der Bearbeitungs-Energiequelleneinheit zu regulieren.

**7.** Elektrische Drahterodiermaschine gemäß Anspruch 6, wobei das Mittel zum Anpassen der Bearbeitungsbedingungen die Länge der Entladungs-Ruhezeit anpasst gemäß der Formel:

$$\text{Toff}(n+1) = \text{Toff}(s) \times \{1 + K \times | P(n)\text{-}P(n+1) | / P(n)\}$$

oder

$$\text{Toff}(n+1) = \text{Toff}(s) \times \{1 + K \times | Q(n)\text{-}Q(n+1) | / Q(n)\}$$

worin

Toff die Entladungs-Ruhezeit ist;
K ein positiver reelle-Zahl-Koeffizient;
P die Hauptpulszahl des entsprechenden Segments; und
Q der Haupt-Pulsintegralwert des entsprechenden Segments.

**8.** Elektrische Drahterodiermaschine gemäß irgendeinem der Ansprüche 1 bis 5, wobei das Mittel zum Anpassen der Bearbeitungsbedingungen die von der Bearbeitungs-Energiequelleneinheit eingegebene Energie anpasst durch Anpassen des Maximalwerts des Entladungspulsstroms der vom Hauptpulsgenerator (1) generierten Hauptpulse, auf der Basis der vom Mittel zum Erfassen einer Stärkenvariation (14, 24) erfassten Stärkenvariation des Arbeitsstücks (5), um so die Energieeingabe von der Bearbeitungs-Energiequelleneinheit zu regulieren.

**9.** Elektrische Drahterodiermaschine gemäß Anspruch 8, wobei das Mittel zum Anpassen der Bearbeitungsbedingungen den Maximalwert des Entladungspulsstroms anpasst gemäß der Formel:

$$\text{Ip}(n+1) = \text{Ip}(s) \times \{1 + K \times | Q(n)\text{-}Q(n+1) | / Q(n)\}$$

worin

Ip der Stromwert des Entladungspulses ist;
K ein negativer reelle-Zahl-Koeffizient; und
Q der Haupt-Pulsintegralwert des entsprechenden Segments.

**10.** Elektrische Drahterodiermaschine gemäß irgendeinem der Ansprüche 1 bis 9, wobei das Mittel zum Erfassen einer Stärkenvariation schließt, dass die Stärke sich ändert, wenn ein vorbestimmter Wert der erfassten Stärkenvariation überschritten wird.

**Revendications**

1. Une machine d'usinage par étincelage à fil de coupe qui exécute un usinage par étincelage multi-trajet par l'entrée d'un courant d'impulsion dans un espace d'usinage entre un fil-électrode (4) et une pièce à usiner (5) provenant d'une unité de source de puissance d'usinage, comprenant :

   un moyen de calcul de distance d'usinage (11) qui calcule une quantité de déplacement du fil-électrode (4) par rapport à la pièce à usiner (5) pour chaque distance prédéterminée,
   un moyen de calcul d'énergie destiné à calculer une entrée d'énergie provenant de l'unité de source de puissance d'usinage au cours d'un usinage par étincelage pour la distance prédéterminée calculée par le moyen de calcul de distance d'usinage (11),
   un moyen de détection de modification d'épaisseur (14, 24) qui détecte une modification de l'épaisseur de la pièce à usiner (5) en fonction de l'énergie calculée par le moyen de calcul d'énergie, et
   un moyen d'ajustement des conditions d'usinage,
   **caractérisé en ce que** :

   le moyen d'ajustement des conditions d'usinage est configuré de façon à émettre une commande pour une condition d'usinage prédéfinie s'il est détecté par le moyen de détection de modification d'épaisseur que l'épaisseur n'a pas changé et de façon à ajuster la condition d'usinage de sorte que l'entrée d'énergie provenant de l'unité de source de puissance d'usinage soit temporairement réduite dans une zone où l'épaisseur de la pièce à usiner change s'il est détecté par le moyen de détection de modification d'épaisseur (14, 24) que l'épaisseur a changé, de sorte qu'une énergie de décharge soit localement régulée dans une zone limitée dans laquelle l'épaisseur de la pièce à usiner change, et une énergie de décharge électrique prédéterminée est restaurée pour un usinage dans des zones dans lesquelles l'épaisseur ne change pas.

2. La machine d'usinage par étincelage à fil de coupe selon la revendication 1, où le moyen d'ajustement des conditions d'usinage est configuré de façon à ajuster la condition d'usinage de sorte que l'entrée d'énergie provenant de l'unité de source de puissance d'usinage soit réduite sous la forme d'une fonction de la valeur absolue de la modification d'épaisseur détectée par le moyen de détection de modification d'épaisseur (14, 24) s'il est détecté que l'épaisseur a changé.

3. La machine d'usinage par étincelage à fil de coupe selon la revendication 1 ou 2, qui comprend en outre, un moyen de stockage d'énergie précédent immédiatement l'entrée destiné au stockage de l'énergie calculée par le moyen de calcul d'énergie au cours de l'usinage par étincelage pour la distance prédéterminée calculée immédiatement antérieurement par le moyen de calcul de distance d'usinage (11), où le moyen de détection de modification d'épaisseur (14, 24) obtient la modification d'épaisseur de la pièce à usiner (5) en fonction de l'énergie d'entrée calculée par le moyen de calcul d'énergie et l'énergie d'entrée stockée dans le moyen de stockage d'énergie précédent immédiatement l'entrée chaque fois que la distance prédéterminée est calculée par le moyen de calcul de distance d'usinage (11).

4. La machine d'usinage par étincelage à fil de coupe selon l'une quelconque des revendications 1 à 3, où l'entrée d'énergie provenant de l'unité de source de puissance d'usinage, qui est calculée par le moyen de calcul d'énergie, est le nombre d'impulsions du courant d'impulsion entré à partir de l'unité de source de puissance d'usinage.

5. La machine d'usinage par étincelage à fil de coupe selon l'une quelconque des revendications 1 à 3, où l'entrée d'énergie provenant de l'unité de source de puissance d'usinage, qui est calculée par le moyen de calcul d'énergie, est une valeur intégrale du courant d'impulsion entré à partir de l'unité de source de puissance d'usinage.

6. La machine d'usinage par étincelage à fil de coupe selon l'une quelconque des revendications 1 à 5, où le moyen d'ajustement des conditions d'usinage ajuste l'entrée d'énergie provenant de l'unité de source de puissance d'usinage par l'ajustement de la longueur d'un temps de repos de décharge au cours duquel l'application d'une tension à l'espace d'usinage entre le fil-électrode (4) et la pièce à usiner (5) est suspendue en fonction de la modification d'épaisseur de la pièce à usiner (4), régulant ainsi l'entrée d'énergie provenant de l'unité de source de puissance d'usinage.

7. La machine d'usinage par étincelage à fil de coupe selon la revendication 6, où le moyen d'ajustement des conditions d'usinage ajuste la longueur d'un temps de repos de décharge selon la formule :

$$Toff(n+1) = Toff(s) \times \{1 + K \times |P(n)-P(n+1)| / P(n)\}$$

ou

$$Toff(n+1) = Toff(s) \times \{1 + K \times |Q(n)-Q(n+1)| / Q(n)\}$$

où :

Toff est le temps de repos de décharge,
K est un coefficient de nombre réel positif,
P est le nombre d'impulsions principales du segment correspondant, et
Q est la valeur intégrale du courant d'impulsion principal du segment correspondant.

8. La machine d'usinage par étincelage à fil de coupe selon l'une quelconque des revendications 1 à 5, où le moyen d'ajustement des conditions d'usinage ajuste l'entrée d'énergie provenant de l'unité de source de puissance d'usinage par l'ajustement de la valeur de crête du courant d'impulsion de décharge des impulsions principales générées à partir du générateur d'impulsions principales (1) en fonction de la modification d'épaisseur de la pièce à usiner (5) détectée par le moyen de détection de modification d'épaisseur (14, 24), régulant ainsi l'entrée d'énergie provenant de l'unité de source de puissance d'usinage.

9. La machine d'usinage par étincelage à fil de coupe selon la revendication 8, où le moyen d'ajustement des conditions d'usinage ajuste la valeur de crête du courant d'impulsion de décharge selon la formule :

$$Ip(n+1) = Ip(s) \times \{1 + K \times |Q(n)-Q(n+1)| / Q(n)\}$$

où :

Ip est la valeur de crête du courant d'impulsion de décharge,
K est un coefficient de nombre réel négatif, et
Q est la valeur intégrale du courant d'impulsion principal du segment correspondant.

10. La machine d'usinage par étincelage à fil de coupe selon l'une quelconque des revendications 1 à 9, où le moyen de détection de modification d'épaisseur conclut que l'épaisseur a changé lorsqu'une valeur prédéterminée est dépassée par la modification d'épaisseur détectée.

# FIG. 1

EP 2 272 613 B1

# FIG. 2

MACHINING DIRECTION D

# FIG. 3

MACHINING DIRECTION D'

## FIG. 4

DISCHARGE
QUIESCENT
TIME

Toff (s)

THICKNESS
CHANGING
PORTION

MACHINING POSITION

## FIG. 5

HEIGHT

STEP PORTION

MACHINING POSITION

# FIG. 6

## FIG. 7

EP 2 272 613 B1

## FIG. 8

EP 2 272 613 B1

FIG. 9

SET MAIN PULSE CURRENT PULSE WIDTH VALUE STORAGE DEVICE — 35

IMMEDIATELY PRECEDING MAIN PULSE CURRENT INTEGRAL VALUE STORAGE DEVICE — 23

THICKNESS CHANGE DETECTOR — 24

DISCHARGE PULSE CURRENT PULSE WIDTH VALUE CONTROLLER — 36

MAIN PULSE CURRENT INTEGRAL VALUE COMPUTING DEVICE — 22

DISCHARGE GAP DETECTOR — 6

FEED PULSE COMPUTING DEVICE — 7

FEED PULSE DISTRIBUTOR — 8

CURRENT DETECTION CIRCUIT — 21

Y-AXIS MOTOR CONTROLLER — 10

X-AXIS MOTOR CONTROLLER — 9

MACHINING DISTANCE COMPUTING DEVICE — 11

MAIN PULSE GENERATOR — 1

DETECTION VOLTAGE GENERATOR — 2

S1  S2  20  5  4  3  3

FIG. 10

# FIG. 11

EP 2 272 613 B1

EP 2 272 613 B1

# FIG. 12

FIG. 13

FIG. 14

27

FIG. 15

FIG. 16

HEIGHT

STEP PORTION

MACHINING POSITION

STREAK 50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11221718 A
- US 6278075 B1
- JP 2008062303 A
- JP 55112728 A
- JP 61095824 A
- JP 55065033 A
- JP 5015471 A
- JP 2003170316 A
- JP 9290328 A
- JP 5305517 A